# NEUE EUROPÄISCHE PATENTSCHRIFT

(11) **EP 1 513 408 B2**
(45) Veröffentlichungstag und Bekanntmachung des Hinweises auf die Entscheidung über den Einspruch: **25.06.2014**
(45) Hinweis auf die Patenterteilung: 20.01.2010
(21) Anmeldenummer: 03727488.3
(22) Anmeldetag: 19.05.2003
(51) Int. Cl.: A22C 13/00

(54) **Rauchdurchlässige Wursthülle auf Basis von Cellulosehydrat mit selbsthaftenden Sperrschichten auf der äusseren Oberfläche sowie ein Verfahren zu deren Herstellung**
Smoke-permeable sausage skin based on cellulose hydrate comprising self-adhesive barrier layers on the outer surface thereof and a method for producing the same
Boyau à saucisse perméable à la fumée à base d'hydrate de cellulose pourvu de couches d'arrêt autoadhésives sur sa surface extérieure et procédé de fabrication dudit boyau

(30) Priorität: 31.05.2002 DE 10224084
(43) Veröffentlichungstag der Anmeldung: 16.03.2005
(73) Patentinhaber: CaseTech GmbH, 29699 Bomlitz (DE)
(72) Erfinder: BLUMENBERG, Klaus, 29664 Walsrode (DE); HENZE-WETHKAMP, Heinrich, 29664 Walsrode (DE); NEUSCHULZ, Willi, 29683 Bad Fallingbostel (DE)
(74) Vertreter: Godemeyer Blum Lenze - werkpatent
(86) Internationale Anmeldenummer: PCT/EP2003/005230
(87) Internationale Veröffentlichungsnummer: WO 2003/101209

(56) Entgegenhaltungen:
- EP-A- 0 047 390
- EP-A- 0 224 060
- EP-A- 0 286 025
- EP-A- 0 457 178
- EP-A- 1 036 502
- DE-A- 2 935 080
- DE-A- 4 237 138
- DE-A1- 3 328 050
- DE-C2- 2 906 118
- US-A- 4 142 013
- 'Vinylidene Chloride' MERCK INDEX Bd. 11.AUFL., Seiten 1572 - 1573

## Beschreibung

Die Erfindung betrifft eine schlauchförmige Wursthülle auf Basis von faserverstärktem Cellulosehydrat mit einer doppelten Barrierebeschichtung auf ihrer äußeren Oberfläche, ein Verfahren zu ihrer Herstellung und die Verwendung als Wursthülle.

Nahrungsmittelhüllen auf Basis von regenerierter Cellulose mit einer Verstärkung durch Faservlies und einer auf die Außen- oder Innenseite aufgebrachten Schicht mit Wirkung gegen den Durchtritt von Gasen sind schon länger bekannt. Es ist beschrieben, derartige Überzüge auf Basis von Vinylidenchloridcopolymersiaten auf der Außenseite von Cellulosehydratschläuchen aufzubringen in US-A-2 961 323 und EP-A 0 008 646. Dabei werden die Copolymerisate für den Filmüberzug aus wässrigen Dispersionen oder aus Beschichtungslösungen in geeigneten organischen Lösungsmittelgemischen aufgebracht.

Um Haftungsprobleme des Filmüberzuges auf der Schlauchhüllenaußenseite zu vermeiden ist im EP-A 0 008 646 beschrieben, eine haftvermittelnde Schicht aus Melamin-Formaldehyd-Harz oder einem Harz auf Basis eines Reaktionsproduktes aus Epichlorhydrin mit einem Polyamin-Polyamid zwischen dem Filmüberzug aus den Copolymerisaten und dem Celluloseregenerat anzuordnen. Aufgrund der Wasserdampf- und Sauerstoff-Undurchlässigkeit werden derartige Veipackungshüllen als Wursthüllen insbesondere für Koch- und Brühwurst eingesetzt um Gewichtsverluste beim Brühen und Lagern sowie Verfärbungen infolge Oxidation durch Luftsauerstoffeinfluss insbesondere bei Leberwurst zu vermeiden. Zur Herstellung geräucherter Wurstsorten ist diese Hülle nicht geeignet.

Auch das Beschichten auf der Innenseite von Celluloseregeneratschläuchen ist bekannt und in der DE-A 197 42 719 offenbart. Beansprucht wird hier ein Cellulosefaserdarm mit einer Beschichtung aus Vinylidenchlorid Copolymeren mit Acrylnitril und (Meth-)acrylsäure-alkylestern. Dabei wird auf der Innenseite des Schlauches zunächst wiederum eine Verankerungssubstanz (Polyamin-Polyamid-Epichlorhydrin-Vorkondensat) aufgebracht und nach dem Trocknen eine Schicht der PVDC-Copolymeren.

Die Nahrungsmittelhülle hat geringe Wasserdampf- (bevorzugt 6 bis 10 g/m^{2 .} d) und Sauerstoffdurchlässigkeiten (4 bis 25 cm³/m^{2 .} d bar) und soll dennoch heißrauchdurchlässig sein. Nähere Angaben wurden zu dieser Eigenschaft nicht gemacht.

Generell sind auf Polyvinylidenchlorid (PVDC) basierenden Beschichtungen eine wirksame Barriere gegen den Durchtritt von Wasserdampf, Sauerstoff und Aromastoffen und werden deshalb eingesetzt um Wasserverlust und Oxidation der Wurst zu vermeiden. Naturgemäß sind derartige Wursthüllen aber nicht geeignet um die Geschmacks- und Aromastoffe beim Räuchern auf die Wurst übertreten zu lassen, was insbesondere bei der Herstellung von geräucherter Streichmettwurst und Leberwurst ein Nachteil ist.

Bekannt sind außerdem Schlauchhüllen auf Basis von regenerierten Celluloseträgern mit organochlorfreien Sperrschichten. In der EP-A 0 557 819 wird eine Schlauchhülle mit chlorfreier Wasserdampfsperrschicht und zusätzlicher chlorfreier Sauerstoffsperrschicht auf Basis von Polyurethansystemen beansprucht. Die Wasserdampfdurchlässigkeit beträgt höchstens 50 g/m^{2 .} 24 h und die Sauerstoffdurchlässigkeit höchstens 120 cm³/m^{2 .} d bar. Rauchdurchlässig sind derartige Sperrschichten nicht. Zur Verankerung der Sperrschicht auf der Cellulose wird auch hier gegebenenfalls ein Haftvermittler auf Basis von Polyamid-Polyaminen eingesetzt.

Eine weitere Wursthülle mit einer chlorfreien, wasserdampfdichten und sauerstoffundurchlässigen Beschichtung als Alternative zu den guten Barriereeigenschaften von PVDC ist in der EP-A 0 457 178 beschrieben. Eine vorzugsweise faserverstärkte Celluloseregenerathülle wird zur Verbesserung der Haftfestigkeit des Sperrschichtüberzuges mit einem üblichen kationischen Haftvermittler wie Epichlorhydrin-Polyaminpolyamid behandelt, wobei das Harz in wassergelöster Form aufgetragen und anschließend der Celluloseregeneratschlauch getrocknet wird. Die aus Vinylmonomeren aufgebaute Barriereschicht wird bevorzugt als ein einziger Überzug auf der Innenseite der Hülle aufgebracht mit einem Flächengewicht von insbesondere mindestens 14 g/m². Die Wursthülle ist aufgrund ihrer Gasundurchlässigkeit für Brühwurst und Kochwurst vorgesehen, für geräucherte Wurstsorten ist sie ungeeignet.

Eine Hülle speziell für Leberwurst ist in der EP-A-1 036 502 beschrieben. Sie basiert auf Cellulosehydrat mit einer Faserverstärkung bevorzugt aus Hanffasern. Auf der äußeren Oberfläche ist sie mit Polymeren beschichtet, bestehend aus Vinyl- bzw. (Meth-)acrylat Monomeren. Im Falle des Auftagens mittels Flexodruck kann die Beschichtung aus mehreren dünnen Einzelschichten bestehen. Eine dickere Schicht wird als Einzelschicht aus wässriger Dispersion aufgebracht, wobei hier zur Haftvermittlung eine Vorbehandlung der Cellulosehydratoberfläche mit einem üblichen Epichlorhydrin-Polyaminpolyamid erfolgt. Es ist eine Gesamtschichtdicke von 3 bis 10 µm beansprucht, die Barrierewirkungen gegen Wasserdampf und Sauerstoff aufweist, mit einer Wasserdampfdurchlässigkeit von 800 bis 1200 g/m^{2 .} d und einer Sauerstoffdurchlässigkeit von 8 bis 12 cm³/m^{2 .} d bar. Die geringe Sperrwirkung gegen Wasserdampfdurchtritt reicht nicht aus um Gewichtsverluste während der Lagerung der Leberwurst wirksam zu vermeiden.

Der Erfindung lag deshalb die Aufgabe zugrunde, eine schlauchförmige Hülle für geräucherte Wurstsorten bereitzustellen, die hohe Rauchdurchlässigkeit aufweist, andererseits aber Wasserverlust vermeidet, damit die Wurst nach mehrtägiger Lagerung nicht faltig wird. Die Sauerstoffdurchlässigkeit soll soweit reduziert sein, dass Verfärbungen der Wurst vermieden werden können, ohne dass damit die Rauchdurchlässigkeit zu stark verringert wird.

Diese Aufgabe wird erfindungsgemäß gelöst durch die schlauchförmige Hülle mit den im Anspruch 1 genannten Merkmalen und die weiteren abhängigen Ansprüche.

Gegenstand der vorliegenden Erfindung ist somit eine schlauchförmige Wursthülle auf Basis von faserverstärktem Cellulosehydrat mit hoher Rauchdurchlässigkeit und geringer Wasserdampfdurchlässigkeit, wobei auf der äußeren Cellulosehydratoberfläche eine zweifach selbsthaftende Beschichtung aus einem Grundstrich und einem Deckstrich aus Homo- oder Copolymeren der Formel (I)

H₂C=CR¹-X¹,

worin R¹ ein Wasserstoffatom oder eine Methylgruppe ist und X¹ für eine Gruppierung -CO-O-R² steht, in der R² eine C₁-C₈-Alkylgruppe ist, aufgetragen ist, dadurch gekennzeichnet, dass der Grundstrich und der Deckstrich aus zwei unterschiedlich zusammengesetzten Vinylpolymerschichten besteht, wobei mindestens der Grundstrich zusätzlich vernetzungsfähige Polymere mit Gruppen aus N-Methylolamid als Vernetzungsmittel enthält, wobei der Grund- und/oder der Deckstrich gegebenenfalls noch Mattierungsmittel sowie weitere Additive enthalten kann, und wobei die gesamte Beschichtung eine Dicke von 12 bis 20 µm hat und ein Flächengewicht von 12 bis 20 g/m² aufweist, und wobei ihre wasserdampfdurchlässigkeit bei 23°C und 95% r.F. 100 bis 650 g/m²d betragt.

Vorzugsweise enthält die Beschichtung zusätzlich Einheiten aus Vinylidenchlorid Monomeren in der Deckschicht, worunter die obere Teilbeschichtung zu verstehen ist, die keinen Kontakt zum Cellulosehydrat hat. Eingesetzt werden im Deckstrich bis zu 68 Gew.-% Vinylidenchlorid Monomereinheiten der Formel Cl₂C=CH₂. bezogen auf das Gesamtgewicht der Polymeren. Dafür wird die handelsübliche Dispersion Diofan A571 oder Diofan A573 der Fa. Solvin eingesetzt, deren Polymeranteil ca 90 % Vinylidenchlorid Einheiten enthält.

Die untere Teilschicht der Beschichtung mit Kontakt zum Cellulosehydrat, im Text zukünftig Grundstrich genannt, enthält vernetzungsfähige Gruppen aus N-Methylolamid. Diese Gruppen können kovalente Bindungen mit dem Cellulosehydrat ausbilden und somit die gesamte Doppelbeschichtung fest auf der Oberfläche der Wursthülle verankern.

Die Vinylpolymeren der Teilbeschichtungen sind Homo- oder Copolymere aus Monomeren der Formel H₂C=CR¹-X¹, worin R¹ ein Wasserstoffatom oder eine Methylgruppe ist. X¹ steht für eine Gruppierung -CO-O-R², wobei R² ein Alkylrest mit einem bis acht Kohlenstoffatomen ist, bevorzugt einem oder vier Kohlenstoffatomen.

Die vernetzungsfähigen Homo- oder Copolymere mit der N-Methylolarnidgruppierung enthalten Monomere der Formel H₂C=CR¹-X², worin R¹ ein Wasserstoffatom oder eine Methylgruppe ist und X² für die Gruppierung -CO-NH-CH₂OH steht. Eingesetzt wird erfindungsgemäß vorzugsweise die handelsübliche, wässrige selbstvernetzende Dispersion Plextol DV 245 und die Dispersion thermoplastischer Acrylpolymerisate Plextol M630, beide von der Fa. Polymer Latex.

Die Teilbeschichtungen können zusätzlich Mattierungsmittel insbesondere auf Basis synthetischer amorpher Kieselsäure enthalten. Diese Zusätze ermöglichen das Einstellen einer verkaufsfördernden Optik und verringern gleichzeitig die Klebrigkeit der Teilbeschichtungen. Es können z.B. die handelsüblichen Produkte Acematt TS 100 und Aerosildispersion K330 der Fa. Degussa und insbesondere Syloid ED 40 der Fa. Grace eingesetzt werden.

Vorzugsweise werden im Grundstrich 12 bis 17 % und im Deckstrich 4 bis 5 % Mattierungsmittel eingesetzt, jeweils bezogen auf das Gesamtgewicht der Polymeren. Das Einmischen der pulverförmigen Mattierungsmittel erfolgt vorzugsweise nachdem diese in Wasser suspendiert wurden, wobei die Verwendung handelsüblicher Benetzungsmittel wie Alkansulfonate vorteilhaft ist.

Als weitere übliche Zusätze können den Beschichtungen Weichmacher wie zum Beispiel Acetyltributylcitrat und zur Verbesserung der Blockfestigkeit und Gleitfähigkeit Wachse wie Carnaubawachs und Paraffinwachs zugegeben werden.

Die gesamte Beschichtung hat eine Dicke von 12 bis 20 µm, bevorzugt 12 bis 18 µm und ein Flächengewicht von 12 bis 20 g/m², insbesondere 12 bis 18 g/m². Der Grundstrich allein hat ein Flächengewicht von vorzugsweise 2 bis 6 g/m². Die Bestimmung des Flächengewichtes und der Dicke der Beschichtung erfolgt nach dem Ablösen der Gesamtbeschichtung vom Celluloseregenerat durch halbstündige Behandlung mit 5 Gew.-% Salpetersäure bei 80°C.

Die Wasserdampfdurchlässigkeit der Wursthülle beträgt bei 23°C und 85 % r.F. 100 bis 650, bevorzugt 200 bis 650 g/m²d, bestimmt gemäß DIN 53122. Die Sauerstoffdurchlässigkeit bei 23°C und 50 % relativer Feuchte (r.F.) 10 bis 70 cm³/m² d bar, insbesondere 20 bis 30 cm³/m² d bar.

Der von der Wursthülle durchgelassene Rauch führt zur Verfärbung der Wurstoberfläche. Diese Färbung kann mit einem üblichen Farbmessgerät erfasst werden. Dafür wird der Remissionsmessbereich des Gerätes mit einer weißen Prüffläche auf 100 % und mit einer schwarzen Fläche auf 0 % kalibriert. Angegeben wird für die jeweilige Wursthülle die Differenz der Remission der geschälten Wurstoberfläche zur Wurstanschnittfläche, also der Wurstgrundfärbung ohne Rauchverfärbung. Diese Differenz wird prozentual bezogen auf die Messergebnisse an der unlackierten Rohware. Gemessen wird diese Remission im Spektralbereich von 450 nm. Die erfindungsgemäße Wursthülle hat nach dieser Messmethode eine Rauchdurchlässigkeit von 30 bis 70 %, vorzugsweise 20 bis 60 %. Ein handelsüblicher Faserdarm mit PVDC-Barriereschicht gegen Wasserdampfdurchtritt weist demgegenüber nach dieser Messmethode eine Rauchdurchlässigkeit von 0 % auf.

Ein weiterer Gegenstand der Erfindung ist ein Verfahren zur Herstellung der anspruchsgemäßen Wursthülle, **dadurch gekennzeichnet, dass** auf eine Schlauchhülle aus faserverstärkter, regenerierter Cellulose auf der Außenseite ohne zusätzliche Haftvermittler eine wässrige Dispersion aus Homo- oder Copolymeren der Formel (I) gleichmäßig aufgebracht wird, diese Grundschicht bis auf eine Oberflächentemperatur von bevorzugt 120°C bis 140°C getrocknet wird, eine weitere Schicht in gleicher Verfahrensweise aufgebracht wird und diese doppelte Beschichtung bis auf eine Oberflächentemperatur von 150°C bis 170°C nochmals getrocknet wird.

Die unbeschichtete Wursthülle wird nach bekannten Verfahren hergestellt. Dabei wird das Faservlies zum Schlauch geformt, auf der Außenseite oder beidseitig mit Viskose beschichtet, im Säurebad regeneriert, gewaschen, mit Weichmacher behandelt und der Cellulose-Regeneratschlauch getrocknet. Das übliche Aufbringen einer haftvermittelnden Schicht zumeist aus Polyamin-Polyamid Epichlorhydrinharz ist zur Verankerung der erfindungsgemäßen Beschichtung nicht notwendig. Eine übliche Innenausrüstung der Regenerathülle zur Einstellung der gewünschten Haftung der Wursthülle zum Brät wird vor der Trocknung der Regeneratschlauches aufgebracht. Das Aufbringen der erfindungsgemäßen doppelten Beschichtung erfolgt kontinuierlich, indem der Celluloseregeneratschlauch im aufgeblasenen Zustand durch die wässrigen Dispersionen der Vinylpolymeren geführt wird. Dabei wird zunächst als Grundstrich eine Acrylatdispersion aufgebracht, die vernetzungsfähige N-Methylolamid Gruppen enthält und auf einen Feststoffgehalt von bevorzugt 10 Gew.-% bis 20 Gew.-% verdünnt wird. Um einen Verlust des Weichmachers Glyzerin aus dem Rohdarm zu vermeiden kann der Dispersion ca. 10 Gew.-% Glyzerin zugegeben werden. Die Auftragsmenge wird mittels eines ringförmigen Luftrakels eingestellt. Anschließend erfolgt die Trocknung bis auf eine Oberflächentemperatur von 120°C, die ausreicht um die Dispersion zu verfilmen, andererseits genügend N-Methylolamidgruppen chemisch unverändert lässt, die dann mit der zweiten Beschichtung vernetzen können. Der Grundstrich enthält einen Zusatz von Mattierungsmittel, damit die Klebrigkeit soweit reduziert wird, dass ein zu starkes Anhaften an den prozessbedingten Umlenkwalzen vermieden wird. Der Deckstrich wird in gleicher Weise aufgebracht wie der Grundstrich. Dabei wird der Gesamtfeststoffgehalt der eingesetzten Dispersionen auf 30 bis 50 Gew.-%, bevorzugt 35 bis 45 Gew.-% eingestellt, bezogen auf den Polymergehalt. Die Trocknung erfolgt nun bis auf eine Oberflächentemperatur von 140°C bis 170°C um den Deckstrich zu verfilmen und die N-Methylolamidgruppen in Grund- und Deckstrich vollständig zur Vernetzung zu bringen. Die beschichtete Wursthülle wird flachgelegt und zu Rollen aufgewickelt und kann nun wie üblich konfektioniert und bedruckt werden.

Die erfindungsgemäßen Wursthüllen haben eine wirksame Barriereschicht gegen Wasserdampfdurchtritt und dabei eine gute Rauchdurchlässigkeit. Damit eigenen sie sich insbesondere zur Herstellung von z.B. geräucherter Brühwurst, Streichmettwurst und insbesondere für geräucherte Leberwurst, die auch nach mehrwöchiger Lagerung nur geringe Faltigkeit zeigt.

Ein weiterer Gegenstand der Erfindung ist daher die Verwendung der beschriebenen Wursthülle als Wursthülle für geräucherte Wurstsorten, wie vorstehend genannt, insbesondere für geräucherte Leberwurst.

Die vorliegende Erfindung soll anhand der folgenden Ausführungsbeispiele näher erläutert werden. Die Prozentangaben sind Gew.%, bezogen auf die Feststoff- bzw. Reinstoffgehalte der Einsatzkomponenten, die Differenz zu 100 % der zur Beschichtung verwendeten Dispersionsmischung ist Wasser.

### Beispiele

In den Beispielen wurden folgende Substanzen eingesetzt:

Plextol M 630 und Plextol DV 245 sind Vinylpolymere, wobei das Plextol DV 245 zusätzlich vernetzungsfähige Polymere mit Gruppen aus N-Methylolamid enthält, beide hergestellt von der Fa. Polymer Latex. Diofan A571 ist eine handelsübliche Dispersion der Fa. Solvin, die Copolymere aus Vinylmonomeren und Vinylidenchlorid enthält. Aerosildispersion K330 von der Fa. Degussa und Syloid ED 40 von der Fa. Grace sind Mattierungsmittel auf Basis synthetischer, amorpher Kieselsäure.

### Beispiel 1: (nicht erfindungsgemäß)

Ein braun pigmentierter, beidseitig viskosierter Faserdarm mit dem Nennkaliber 55 wurde mit Dispersionen folgender Zusammensetzung beschichtet:

| | | |
|---|---|---|
| Grundstrich: | 15 % | Plextol DV245 |
| | 2 % | Aerosildispersion K330 |
| | | |
| Deckstrich: | 25 % | Plextol M630 |
| | 12,5 % | Plextol DV245 |
| | 6,25 % | Diofan A571 |
| | 2 % | Aerosildispersion K330 |

Der Grundstrich wurde auf eine Oberflächentemperatur von 130°C getrocknet und der Deckstrich auf 160°C. Der Lackauftrag der Gesamtbeschichtung wurde mittels der Luftrakel auf 11,9 g/m² eingestellt.

Die Untersuchungen der Wursthüllenmuster zeigten folgende Ergebnisse:
Nach fünfstündigem Kochen in Wasser zeigte sich keine Ablösung der Beschichtung vom Celluloseregenerat. Die Gesamtbeschichtungsdicke betrug 14,9 µm. Die Wasserdampfdurchlässigkeit bei 23°C und 85 % r.F. war 325 g/m²d, die Sauerstoffdurchlässigkeit bei 23°C und 50 % r.F. 25,2 cm³/cm²d bar. Die Muster wurden mit Leberwurst gefüllt und geräuchert. Die Rauchdurchlässigkeit betrug 23 % und die Gewichtverluste nach 12 Tagen 7,4 Gew.-%, bezogen auf die frisch gefüllte, ungekochte Wurst. Im sensorischen Test der Leberwurst wurde ein intensiver Raucharomageschmack festgestellt.

### Beispiel 2:

Ein braun pigmentierter, beidseitig viskosierter Faserdarm mit dem Nennkaliber 55 wurde mit Dispersionen mit der Zusammensetzung wie in Beispiel 1 beschichtet.

Der Grundstrich wurde auf eine Oberflächentemperatur von 130°C getrocknet und der Deckstrich auf 160 °C. Der Lackauftrag der Gesamtbeschichtung wurde mittels der Luftrakel im Unterschied zu Beispiel 1 auf 18,7 g/m² eingestellt.

Die Untersuchungen der Wursthüllenmuster zeigten folgende Ergebnisse:
Nach fünfstündigem Kochen in Wasser zeigte sich keine Ablösung der Beschichtung vom Celluloseregenerat. Die Gesamtbeschichtungsdicke betrug 20 µm. Die Wasserdampfdurchlässigkeit bei 23°C und 85 % r.F. war 227 g/m²d, die Sauerstoffdurchlässigkeit bei 23°C und 50 % r.F. 22,2 cm³/cm²d bar. Die Muster wurden mit Leberwurst gefüllt und geräuchert. Die Rauchdurchlässigkeit betrug 19 % und die Gewichtverluste nach 12 Tagen 4,7 Gew.-%, bezogen auf die frisch gefüllte, ungekochte Wurst. Im sensorischen Test der Leberwurst wurde ein Raucharomageschmack festgestellt, der geringfügig stärker als bei Beispiel 1 war.

### Beispiel 3:

Ein rotbraun pigmentierter, beidseitig viskosierter Faserdarm mit dem Nennkaliber 55 wurde mit Dispersionen folgender Zusammensetzung beschichtet:

| | | |
|---|---|---|
| Grundstrich: | 15 % | Plextol DV245 |
| | 2 % | Aerosildispersion K330 |
| | | |
| Deckstrich: | 20 % | Plextol M630 |
| | 20 % | Plextol DV245 |
| | 2 % | Aerosildispersion K330 |

Der Grundstrich wurde auf eine Oberflächentemperatur von 130°C getrocknet und der Deckstrich auf 160°C. Der Lackauftrag der Gesamtbeschichtung wurde mittels der Luftrakel auf 13,7 g/m² eingestellt.

Die Untersuchungen der Wursthüllenmuster zeigten folgende Ergebnisse: Nach fünfstündigem Kochen in Wasser zeigte sich keine Ablösung der Beschichtung vom Celluloseregenerat. Die Gesamtbeschichtungsdicke betrug 16,6 µm. Die Wasserdampfdurchlässigkeit bei 23°C und 85 % r.F. war 456 g/m²d, die Sauerstoffdurchlässigkeit bei 23°C und 50 % r.F. 21,8 cm³/cm²d bar. Die Muster wurden mit Leberwurst gefüllt und geräuchert. Die Rauchdurchlässigkeit betrug 37 % und die Gewichtverluste nach 12 Tagen 8,8 Gew.-%, bezogen auf die frisch gefüllte, ungekochte Wurst. Im sensorischen Test der Leberwurst wurde ein Raucharomageschmack festgestellt, dessen Intensität etwas stärker war als bei Beispiel 2.

### Beispiel 4:

Ein ungefärbter, beidseitig viskosierter Faserdarm mit dem Nennkaliber 55 wurde mit Dispersionen folgender Zusammensetzung beschichtet:

| | | |
|---|---|---|
| Grundstrich: | 15 % | Plextol DV245 |
| | 1 % | Syloid ED40 |
| | 10 % | Glyzerin |
| | | |
| Deckstrich: | 10 % | Plextol M630 |
| | 15 % | Plextol DV245 |
| | 14 % | Diofan A571 |
| | 1 % | Syloid ED40 |

Der Grundstrich wurde auf eine Oberflächentemperatur von 130°C getrocknet und der Deckstrich auf 160°C. Der Lackauftrag der Gesamtbeschichtung wurde mittels der Luftrakel auf 16,2 g/m² eingestellt.

Die Untersuchungen der Wursthüllenmuster zeigten folgende Ergebnisse:
Nach fünfstündigem Kochen in Wasser zeigte sich keine Ablösung der Beschichtung vom Celluloseregenerat. Die Gesamtbeschichtungsdicke betrug 14,2 µm. Die Wasserdampfdurchlässigkeit bei 23°C und 85 % r.F. betrug 403 g/m²d, die Sauerstoffdurchlässigkeit bei 23°C und 50 % r.F. 28,8 cm³/cm²d bar. Die Muster wurden mit Leberwurst gefüllt und geräuchert. Die Rauchdurchlässigkeit betrug 41 % und die Gewichtverluste nach 12 Tagen 7,2 Gew.-%, bezogen auf die frisch gefüllte, ungekochte Wurst. Im sensorischen Test der Leberwurst wurde intensiver Raucharomageschmack festgestellt, entsprechend Beispiel 2.

### Beispiel 5:

Ein cremefarbener, beidseitig viskosierter Faserdarm mit dem Nennkaliber 50 wurde mit Dispersionen folgender Zusammensetzung beschichtet:

| | | |
|---|---|---|
| Grundstrich: | 15 % | Plextol DV245 |
| | 1 % | Syloid ED40 |
| | 10 % | Glyzerin |
| | | |
| Deckstrich: | 17 % | Plextol DV245 |
| | 24 % | Diofan A571 |
| | 1 % | Syloid ED40 |

Der Grundstrich wurde auf eine Oberflächentemperatur von 130°C getrocknet und der Deckstrich auf 160°C. Der Lackauftrag der Gesamtbeschichtung wurde mittels der Luftrakel auf 15,4 g/m² eingestellt.

Die Untersuchungen der Wursthüllenmuster zeigten folgende Ergebnisse: Nach fünfstündigem Kochen in Wasser zeigte sich keine Ablösung der Beschichtung vom Celluloseregenerat. Die Gesamtbeschichtungsdicke betrug 12,3 µm. Die Wasserdampfdurchlässigkeit bei 23°C und 85 % r.F. betrug 346 g/m²d, die Sauerstoffdurchlässigkeit bei 23°C und 50 % r.F. 31,3 cm³/cm²d bar. Die Muster wurden mit Leberwurst gefüllt und geräuchert. Die Rauchdurchlässigkeit betrug 50 % und die Gewichtverluste nach 12 Tagen 7,0 Gew.-%, bezogen auf die frisch gefüllte, ungekochte Wurst. Im sensorischen Test der Leberwurst wurde intensiver Raucharomageschmack festgestellt, entsprechend Beispiel 3.

## Patentansprüche

1. Schlauchförmige Wursthülle auf Basis von faserverstärktem Cellulosehydrat mit hoher Rauchdurchlässigkeit und geringer Wasserdampfdurchlässigkeit, wobei auf der äußeren Cellulosehydratoberfläche eine zweifach selbsthaftende Beschichtung aus einem Grundstrich und einem Deckstrich aus Homo- oder Copolymeren der Formel (I)
H₂C=CR¹-X¹,
worin R¹ ein Wasserstoffatom oder eine Methylgruppe ist und X¹ für eine Gruppierung -CO-O-R² steht, in der R² eine C₁-C₈-Alkylgruppe ist, aufgetragen ist, **dadurch gekennzeichnet, dass** der Grundstrich und der Deckstrich aus zwei unterschiedlich zusammengesetzten Vinylpolymerschichten besteht, wobei mindestens der Grundstrich zusätzlich vernetzungsfähige Polymere mit Gruppen aus N-Methylolamid als Vernetzungsmittel enthält, wobei der Grund- und/oder der Deckstrich gegebenenfalls noch Mattierungsmittel sowie weitere Additive enthalten kann, **dadurch gekennzeichnet, dass** die gesamte Beschichtung eine Dicke von 12 bis 20 µm hat und ein Flächengewicht von 12 bis 20 g/m² aufweist, und dass ihre Wasserdampfdurchlässigkeit bei 23°C und 85 % r. F. 100 bis 650 g/m²d beträgt.

2. Wursthülle gemäß Anspruch 1, **dadurch gekennzeichnet, dass** der Deckstrich als Additive Vinylidenchlorid Monomeren der Formel Cl₂C=CH₂ enthält, in einem Anteil von bis zu 68 Gew. -%, bezogen auf das Gesamtgewicht der Polymeren im Deckstrich.

3. Wursthülle gemäß Anspruch 1, **dadurch gekennzeichnet, dass** die vernetzungsfähigen Polymere Homo- oder Copolymere aus Monomeren der Formel (II) H₂C=CR¹-X² umfassen, worin R¹ ein Wasserstoffatom oder eine Methylgruppe ist und X² für die Gruppierung -CO-NH-CH₂OH steht.

4. Wursthülle gemäß einem oder mehreren der Ansprüche 1 bis 3, **dadurch gekennzeichnet, dass** die Beschichtungen Mattierungsmittel auf Basis synthetischer amorpher Kieselsäure enthalten.

5. Wursthülle gemäß einem oder mehreren der Ansprüche 1 bis 4, **dadurch gekennzeichnet, dass** ihre Rauchdurchlässigkeit 30 bis 70 % beträgt, bezogen auf die unbeschichtete Rohware.

6. Verfahren zur Herstellung der Wursthülle nach einem der Ansprüche 1 bis 5, **dadurch gekennzeichnet, dass** auf eine Schlauchhülle aus faserverstärkter, regenerierter Cellulose auf der Außenseite ohne zusätzlichen Haftvermittler eine wässrige Dispersion aus Homo- oder Copolymeren der Formel (I) gleichmäßig aufgebracht wird, diese Grundschicht bis auf eine Oberflächentemperatur von bevorzugt 120°C bis 140°C getrocknet wird, eine weitere Schicht in gleicher Verfahrensweise aufgebracht wird und diese doppelte Beschichtung bis auf eine Oberflächentemperatur von 150°C bis 170°C nochmals getrocknet wird.

7. Verwendung einer Wursthülle gemäß einem der Ansprüche 1 bis 5 als Wursthülle für geräucherte Wurstsorten.

## Claims

1. A tubular sausage skin based on fibre-reinforced cellulose hydrate having high smoke permeability and low water vapour permeability, wherein there is applied to the outer surface of the cellulose hydrate a double self-adhesive coating comprising a base coat and a top coat of homo- or co-polymers of formula (I)
H₂C=CR¹-X¹,
wherein R¹ is a hydrogen atom or a methyl group and X¹ represents a group -CO-O-R² in which R² is a C₁-C₈-alkyl group, **characterised in that** the base coat and the top coat consist of two vinyl polymer layers of different compositions, wherein at least the base coat additionally contains crosslinkable polymers having N-methylolamide groups as crosslinker, wherein the base and/or top coat can optionally also contain mattifying agents and further additives, **characterised in that** the entire coating has a thickness of 12 to 20 µm and an area density of 12 to 20 g/m² and that its water vapour permeability at 23 °C and 85 % RH is 100 to 650 g/m²d.

2. The sausage skin according to claim 1, **characterised in that** the top coat contains as additives vinylidene chloride monomers of the formula Cl₂C=CH₂ in an amount of up to 68 wt.%, based on the total weight of the polymers in the top coat.

3. The sausage skin according to claim 1, **characterised in that** the crosslinkable polymers comprise homo- or co-polymers of monomers of formula (II) H₂C=CR¹-X², wherein R¹ is a hydrogen atom or a methyl group and X² represents the group -CO-NH-CH₂OH.

4. The sausage skin according to one or more of claims 1 to 3, **characterised in that** the coatings contain mattifying agents based on synthetic amorphous silica.

5. The sausage skin according to one or more of claims 1 to 4, **characterised in that** its smoke permeability is from 30 to 70 %, based on the uncoated raw product.

6. A method for producing the sausage skin according to any one of claims 1 to 5, **characterised in that** an aqueous dispersion of homo- or co-polymers of formula (I) is applied uniformly, without additional adhesion promoters, to the outside of a tubular skin of fibre-reinforced regenerated cellulose, this base layer is dried to a surface temperature of preferably from 120 °C to 140 °C, a further layer is applied by the same procedure, and this double coating is again dried to a surface temperature of from 150 °C to 170 °C.

7. A use of a sausage skin according to any one of claims 1 to 5 as a sausage skin for smoked types of sausage.

## Revendications

1. Boyau à saucisse tubulaire à base d'hydrate de cellulose renforcé par des fibres, ayant une perméabilité élevée à la fumée et une faible perméabilité à la vapeur d'eau, dans lequel on applique sur la surface d'hydrate de cellulose externe un revêtement doublement auto-adhésif, constitué d'une couche de base et d'une couche de couverture constituées d'homo- ou copolymères de formule (I) :
H₂C=CR¹-X¹,
dans laquelle R¹ est un atome d'hydrogène ou un groupement méthyle et X¹ représente un groupement -CO-O-R², R² étant un groupement alkyle en C₁-C₈, **caractérisé en ce que** la couche de base et la couche de couverture sont constituées de deux couches de polymère vinylique de composition différente, dans lequel au moins la couche de base contient en outre des polymères réticulables avec des groupements N-méthylolamide comme agent de réticulation et dans lequel la couche de base et/ou la couche de couverture peut ou peuvent éventuellement contenir encore des agents de matage ainsi que d'autres additifs, **caractérisé en ce que** l'ensemble du revêtement a une épaisseur de 12 à 20 µm et présente un poids par unité de surface de 12 à 20 g/m², et sa perméabilité à la vapeur d'eau à une température de 23°C et à une humidité relative de 85 % est de 100 à 650 g/m²d.

2. Boyau à saucisse selon la revendication 1, **caractérisé en ce que** la couche de couverture contient, comme additifs, des monomères de chlorure de vinylidène de formule Cl₂C=CH₂, dans une proportion allant jusqu'à 68 % en poids, par rapport au poids total des polymères présents dans la couche de couverture.

3. Boyau à saucisse selon la revendication 1, **caractérisé en ce que** les polymères réticulables comprennent des homo- ou des copolymères de monomères de formule (II) H₂C=CR¹-X², dans laquelle R¹ est un atome d'hydrogène ou un groupement méthyle et X² représente le groupement -CO-NH-CH₂OH.

4. Boyau à saucisse selon une ou plusieurs des revendications 1 à 3, **caractérisé en ce que** les revêtements contiennent un agent de matage à base d'acide silicique amorphe synthétique.

5. Boyau à saucisse selon une ou plusieurs des revendications 1 à 4, **caractérisée en ce que** sa perméabilité à la fumée est de 30 à 70 %, par rapport au produit brut non revêtu.

6. Procédé de fabrication du boyau à saucisse selon l'une quelconque des revendications 1 à 5, **caractérisé en ce que** l'on applique uniformément sur un boyau tubulaire en cellulose régénérée renforcée par des fibres, sur la face externe, sans agent adhésif supplémentaire, une dispersion aqueuse constituée d'homo- ou de copolymères de formule (I), on sèche cette couche de base jusqu'à une température de surface de préférence de 120°C à 140°C, on applique une autre couche selon le même mode opératoire et on sèche encore ce revêtement double jusqu'à une température de surface de 150°C à 170°C.

7. Utilisation d'un boyau à saucisse selon l'une quelconque des revendications 1 à 5 comme boyau à saucisse pour types de saucisses fumées.
